# EUROPEAN PATENT APPLICATION

(11) **EP 4 811 762 A1**
(43) Date of publication of application: **23.09.2026**
(21) Application number: 25190202.9
(22) Date of filing: 17.07.2025
(51) Int. Cl.: H04N 1/00, G06F 3/12

(54) **INFORMATION PROCESSING SYSTEM, INFORMATION PROCESSING APPARATUS, AND PROGRAM**

(30) Priority: 19.03.2025 JP 2025045521
(71) Applicant: FUJIFILM Business Innovation Corp., Minato-ku Tokyo (JP)
(72) Inventor: NITTA, Manami, Yokohama-shi, Kanagawa (JP)
(74) Representative: Becker Kurig & Partner Patentanwälte mbB

(57) **Abstract**

An information processing system includes a processor configured to: display, in a case where a distance between a first apparatus and a second apparatus does not exceed a predetermined distance, display content of an operation screen of the first apparatus on an operation screen of the second apparatus; and convert, in a case where the distance exceeds the predetermined distance, the display content into a predetermined form to display the converted display content on the operation screen of the second apparatus.

## Description

### BACKGROUND OF THE INVENTION

### (i) Field of the Invention

The present invention relates to an information processing system, an information processing apparatus, and a program.

### (ii) Description of Related Art

A so-called remote UI is known in which a content similar to content displayed on an operation panel of a printer is displayed on an operation screen of a user terminal connected to the printer via a network, and a remote operation from the user terminal to the printer is received. In addition, there is also a related technology (for example, JP2013-256060A). In such a related technology, a message displayed on an operation panel of a printer may be displayed without change on an operation screen of a user terminal, or may be displayed by being converted into a message considering that a remote operation is performed. For example, in a case where content of an error that has occurred in the printer prompts a physical operation on the printer for error elimination, a guide message displayed on the printer is converted into a message considering that the remote operation is performed, and is displayed on the user terminal. In this case, the converted message may be an expression that avoids prompting the physical operation on the printer.

### SUMMARY OF THE INVENTION

However, even in a case where the physical operation on the printer can be performed by a user, for example, in a case where the printer and the user terminal are present in the same room, the message is uniformly converted into an expression that avoids prompting the physical operation on the printer regardless of a distance between the printer and the user terminal. Then, the converted message is displayed on the operation screen of the user terminal.

**In** such a case, the user may have difficulty in eliminating the error relying on the message displayed on the operation screen of the user terminal, and may be forced to move to check the message displayed on the operation panel of the printer.

An object of the present disclosure is to display the display content of an operation screen of a first apparatus on an operation screen of a second apparatus in a form in which a distance between the first apparatus and the second apparatus are taken into consideration, as compared with a case where the display content of the operation screen of the first apparatus is displayed by being uniformly converted regardless of the distance between the first apparatus and the second apparatus and displayed on the operation screen of the second apparatus.

According to a first aspect of the present disclosure, there is provided an information processing system including: a processor configured to: display, in a case where a distance between a first apparatus and a second apparatus does not exceed a predetermined distance, display content of an operation screen of the first apparatus on an operation screen of the second apparatus; and convert, in a case where the distance exceeds the predetermined distance, the display content into a predetermined form to display the converted display content on the operation screen of the second apparatus.

According to a second aspect of the present disclosure, in the information processing system according to the first aspect, the predetermined distance may be a distance at which the first apparatus and the second apparatus are connectable to each other by using a predetermined communication method.

According to a third aspect of the present disclosure, in the information processing system according to the second aspect, the predetermined communication method may be short-range wireless communication or wired communication.

According to a fourth aspect of the present disclosure, in the information processing system according to the second aspect, the processor may be configured to: display, in a case where a predetermined identifier attached to the first apparatus is read by the second apparatus, the display content on the operation screen of the second apparatus on an assumption that the first apparatus and the second apparatus are at the distance at which the first apparatus and the second apparatus are connectable to each other.

According to a fifth aspect of the present disclosure, in the information processing system according to any one of the first to fourth aspects, the display content may be a message prompting a physical operation on the first apparatus, and the display content converted into the predetermined form may be a message that avoids prompting the physical operation on the first apparatus.

According to a sixth aspect of the present disclosure, in the information processing system according to the fifth aspect, the message prompting the physical operation may be a message including specific operation content for eliminating an error of the first apparatus, and the message that avoids prompting the physical operation may be a message not including the specific operation content.

According to a seventh aspect of the present disclosure, there is provided an information processing apparatus including: a processor configured to: display, in a case where a distance between the information processing apparatus and a terminal that operates the information processing apparatus does not exceed a predetermined distance, display content of an operation screen of the information processing apparatus on an operation screen of the terminal; and convert, in a case where the distance exceeds the predetermined distance, the display content into a predetermined form to display the converted display content on the operation screen of the terminal.

According to an eighth aspect of the present disclosure, there is provided a program executed by a computer that controls a first apparatus and a second apparatus, the program causing the computer to implement: a function of displaying, in a case where a distance between a first apparatus and a second apparatus does not exceed a predetermined distance, display content of an operation screen of the first apparatus on an operation screen of the second apparatus; and a function of converting, in a case where the distance exceeds the predetermined distance, the display content into a predetermined form to display the converted display content on the operation screen of the second apparatus.

According to the first aspect of the present disclosure, the display content of the operation screen of the first apparatus may be displayed on the operation screen of the second apparatus in a form in which the distance between the first apparatus and the second apparatus are taken into consideration, as compared with a case where the display content of the operation screen of the first apparatus is uniformly converted and displayed on the operation screen of the second apparatus regardless of the distance between the first apparatus and the second apparatus.

According to the second aspect of the present disclosure, whether or not the distance from the second apparatus to the first apparatus is short may be determined depending on whether or not the first apparatus and the second apparatus are connectable to each other by using the predetermined communication method.

According to the third aspect of the present disclosure, whether or not the distance from the second apparatus to the first apparatus is short may be determined depending on whether or not the first apparatus and the second apparatus are connectable by using the short-range wireless communication or wired communication method.

According to the fourth aspect of the present disclosure, whether or not the distance from the second apparatus to the first apparatus is short may be determined depending on whether or not the identifier attached to the first apparatus is read by the second apparatus.

According to the fifth aspect of the present disclosure, the message prompting the physical operation, which is displayed on the operation screen of the first apparatus, may be displayed on the operation screen of the second apparatus in a form in which the distance between the first apparatus and the second apparatus are taken into consideration, as compared with a case where the message prompting the physical operation, which is displayed on the operation screen of the first apparatus, is uniformly converted into the message that avoids prompting the physical operation and displayed on the operation screen of the second apparatus regardless of the distance between the first apparatus and the second apparatus. Also, even in a case where it is difficult to perform the physical operation on the first apparatus while viewing the message displayed on the operation screen of the first apparatus, the physical operation on the first apparatus may be performed while viewing the message displayed on the operation screen of the second apparatus.

According to the sixth aspect of the present disclosure, the message including the specific operation content for eliminating the error of the first apparatus and displayed on the operation screen of the first apparatus may be displayed on the operation screen of the second apparatus in a form in which the distance between the first apparatus and the second apparatus are taken into consideration, as compared with a case where the message including the specific operation content for eliminating the error of the first apparatus is uniformly converted into the message not including the specific operation content for eliminating the error and displayed on the operation screen of the second apparatus regardless of the distance between the first apparatus and the second apparatus.

According to the seventh aspect of the present disclosure, the display content of the operation screen of the first apparatus may be displayed on the operation screen of the second apparatus in a form in which the distance between the first apparatus and the second apparatus are taken into consideration, as compared with a case where the display content of the operation screen of the first apparatus is uniformly converted and displayed on the operation screen of the second apparatus regardless of the distance between the first apparatus and the second apparatus.

According to the eighth aspect of the present disclosure, the display content of the operation screen of the first apparatus may be displayed on the operation screen of the second apparatus in a form in which the distance between the first apparatus and the second apparatus are taken into consideration, as compared with a case where the display content of the operation screen of the first apparatus is uniformly converted and displayed on the operation screen of the second apparatus regardless of the distance between the first apparatus and the second apparatus.

### BRIEF DESCRIPTION OF THE DRAWINGS

Exemplary embodiment(s) of the present invention will be described in detail based on the following figures, wherein:
FIG. 1 is a diagram showing an example of an overall configuration of an information processing system to which the present exemplary embodiment is applied;
FIG. 2 is a diagram showing an example of a hardware configuration of an image processing apparatus that is an example of an information processing apparatus according to the exemplary embodiment of the present invention;
FIG. 3 is a diagram showing an example of a functional configuration of a control unit of the image processing apparatus;
FIG. 4 is a flowchart showing an example of a flow of processing of the image processing apparatus;
FIG. 5 is a diagram showing a specific example of the processing of the image processing apparatus that enables execution of printing processing by a remote operation from a user terminal;
FIG. 6 is a diagram showing a specific example of the processing of the image processing apparatus that enables the execution of the printing processing by the remote operation from the user terminal; and
FIG. 7 is a diagram showing a specific example of display content.

### DETAILED DESCRIPTION OF THE INVENTION

Hereinafter, an exemplary embodiment of the present invention will be described in detail with reference to the accompanying drawings.

### <Configuration of Information Processing System 1>

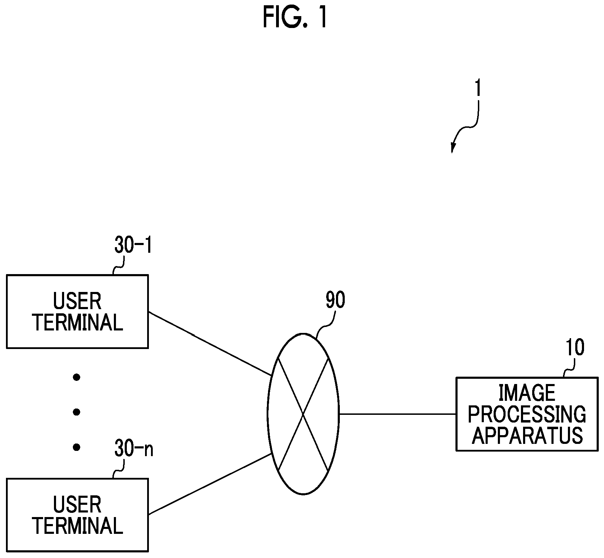

FIG. 1 is a diagram showing an example of an overall configuration of an information processing system 1 to which the present exemplary embodiment is applied.

The information processing system 1 is a system that can display the display content of an operation screen of a first apparatus on an operation screen of a second apparatus in a form in which a distance between the first apparatus and the second apparatus is taken into consideration. The information processing system 1 is configured by connecting an image processing apparatus 10 as the first apparatus and user terminals 30-1 to 30-n (n is an integer of 1 or more) as the second apparatuses to each other via a network 90. The network 90 is, for example, a local area network (LAN) or the Internet. Hereinafter, the user terminals 30-1 to 30-n will be collectively referred to as a "user terminal 30" unless it is not necessary to individually describe the user terminals 30-1 to 30-n.

### [Image Processing Apparatus 10]

The image processing apparatus 10 performs various types of processing in accordance with an input operation of a user who uses the information processing system 1. For example, the image processing apparatus 10 can execute printing processing of forming and outputting an image on paper or the like as a recording medium, copying processing of copying and outputting an image of an original document on paper or the like, reading processing of reading an image formed on paper or the like, processing of transmitting the original document by a facsimile, and the like. Examples of the image processing apparatus 10 include a so-called electrophotographic type multifunction machine that forms a toner image on a printing surface of paper and a so-called inkjet type printer that discharges ink onto the printing surface of paper.

The image processing apparatus 10 has an operation screen as a user interface and can acquire input information input to the operation screen and execute various types of processing. In addition, the image processing apparatus 10 can acquire various types of information transmitted from the user terminal 30 connected to the image processing apparatus 10 via the network 90 and from the outside, and execute various types of processing. Further, the image processing apparatus 10 can transmit various types of information to the user terminal 30 and the outside.

For example, in a case where a distance between the image processing apparatus 10 and the user terminal 30 does not exceed a predetermined distance, the image processing apparatus 10 displays the display content of the operation screen of the image processing apparatus 10 on the operation screen of the user terminal 30. Specifically, for example, the image processing apparatus 10 displays a message prompting a physical operation on the image processing apparatus 10, which is displayed on the operation screen of the image processing apparatus 10 in a case where an error occurs, on the operation screen of the user terminal 30. In this case, the image processing apparatus 10 displays, for example, a message including specific operation content for eliminating the error of the image processing apparatus 10, as the "message prompting the physical operation on the image processing apparatus 10", on the operation screen of the user terminal 30. Here, the "physical operation" is, for example, an operation of replenishing paper, replacing toner, pressing a hardware button, and eliminating a paper jam.

On the other hand, in a case where the distance between the image processing apparatus 10 and the user terminal 30 exceeds the predetermined distance, the image processing apparatus 10 converts the display content of the operation screen of the image processing apparatus 10 into a predetermined form and displays the converted display content on the operation screen of the user terminal 30. Specifically, the image processing apparatus 10 converts the message prompting the physical operation on the image processing apparatus 10, which is displayed on the operation screen of the image processing apparatus 10, into a predetermined form and displays the converted message on the operation screen of the user terminal 30.

In this case, the image processing apparatus 10 converts the message prompting the physical operation on the image processing apparatus 10, which is displayed on the operation screen of the image processing apparatus 10, into a message that avoids prompting the physical operation on the image processing apparatus 10, and displays the converted message on the operation screen of the user terminal 30. The image processing apparatus 10 displays, for example, a message that does not include the specific operation content for eliminating the error of the image processing apparatus 10, as the "message that avoids prompting the physical operation", on the operation screen of the user terminal 30. The configuration and the details of the processing of the image processing apparatus 10 will be described later.

### [User Terminal 30]

The user terminal 30 is an information processing apparatus such as a smartphone, a tablet terminal, or a personal computer operated by the user who uses the information processing system 1. The user terminal 30 is installed with application software that enables generation of print data, issuance of an instruction to execute the printing processing or the like to the image processing apparatus 10 via the operation screen as a remote UI.

The user terminal 30 can acquire various types of information transmitted from the image processing apparatus 10 and the outside and execute various types of processing. Further, the user terminal 30 can transmit various types of information to the image processing apparatus 10 and the outside. For example, the user terminal 30 can generate the print data based on the operation of the user, and transmit the print data to the image processing apparatus 10. In addition, the user terminal 30 can transmit the instruction to execute the printing processing or the like to the image processing apparatus 10.

The above-described configuration of the information processing system 1 is merely an example, and the information processing system 1 as a whole need only have functions that achieve the above-described processing. Therefore, some or all of the functions for achieving the above-described processing may be shared or cooperated in the information processing system 1. That is, as described above, some or all of the functions of the image processing apparatus 10 constituting the information processing system 1 may be used as the functions of another information processing apparatus (for example, the user terminal 30). In addition, some or all of the functions of another information processing apparatus may be used as the functions of the image processing apparatus 10. Further, some or all of the functions of the image processing apparatus 10 or other apparatuses constituting the information processing system 1 may be transferred to another server (not shown). As a result, the processing of the information processing system 1 as a whole may be accelerated, and the processing can also be complemented.

### <Hardware Configuration>

### [Hardware Configuration of Image Processing Apparatus 10]

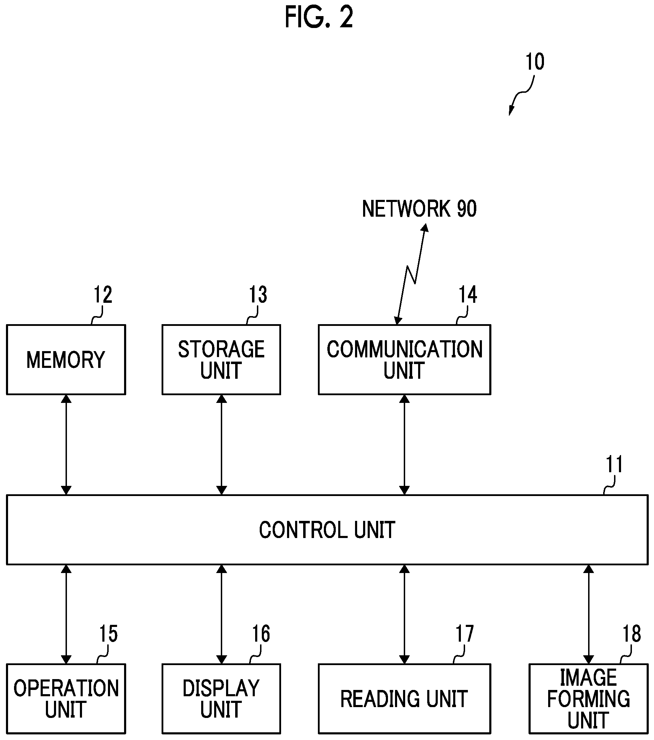

FIG. 2 is a diagram showing an example of a hardware configuration of the image processing apparatus 10 which is an example of an information processing apparatus according to the exemplary embodiment of the present invention.

The image processing apparatus 10 includes a control unit 11, a memory 12, a storage unit 13, a communication unit 14, an operation unit 15, a display unit 16, a reading unit 17, and an image forming unit 18. These units are connected to each other via a data bus, an address bus, a peripheral component interconnect (PCI) bus, and the like.

The control unit 11 is a processor that controls the functions of the image processing apparatus 10 through the execution of various software, such as an OS (system software) and app software (application software). In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other.

The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The memory 12 is a storage area in which various types of software, data used for executing the software, and the like are stored, and is used as a work area in calculations. The memory 12 is configured by, for example, a random access memory (RAM).

The storage unit 13 is a storage area in which input data for various types of software, output data from various types of software, and the like are stored. The storage unit 13 is configured by, for example, a hard disk drive (HDD), a solid state drive (SSD), or a semiconductor memory, which is used for storing programs, various types of setting data, and the like. The storage unit 13 is provided with a database that stores various types of information.

The communication unit 14 transmits and receives data to and from the user terminal 30 and the outside via the network 90. The operation unit 15 is configured by, for example, a keyboard, a mouse, a mechanical button, or a switch, and receives the input operation.

The operation unit 15 also includes a touch sensor integrally constituting a touch panel with the display unit 16.

The display unit 16 is configured by, for example, a liquid crystal display or an organic electro luminescence (EL) display to be used for information display, and displays data of an image or text, and the like. The display unit 16 displays the user interface and the like.

The reading unit 17 reads an image recorded on a medium such as paper. The reading unit 17 may be configured by, for example, a charge coupled device (CCD) type scanner that reduces reflected light with respect to light emitted from a light source to the original document with a lens and receives the reflected light using a CCD. In addition, the reading unit 17 may be configured by a contact image sensor (CIS) type scanner that receives, using a CIS, reflected light of light emitted from an LED light source to the original document in order, or the like.

The image forming unit 18 forms an image to be printed on a printing surface of paper as the recording medium by, for example, an electrophotographic method, an inkjet method, or the like.

### [Hardware Configuration of User Terminal 30]

The user terminal 30 includes a control unit, a memory, a storage unit, a communication unit, an operation unit, and a display unit corresponding to the control unit 11, the memory 12, the storage unit 13, the communication unit 14, the operation unit 15, and the display unit 16 shown in FIG. 2, respectively. These units are connected to each other via a data bus, an address bus, a PCI bus, and the like.

### <Functional Configuration>

### [Functional Configuration of Image Processing Apparatus 10]

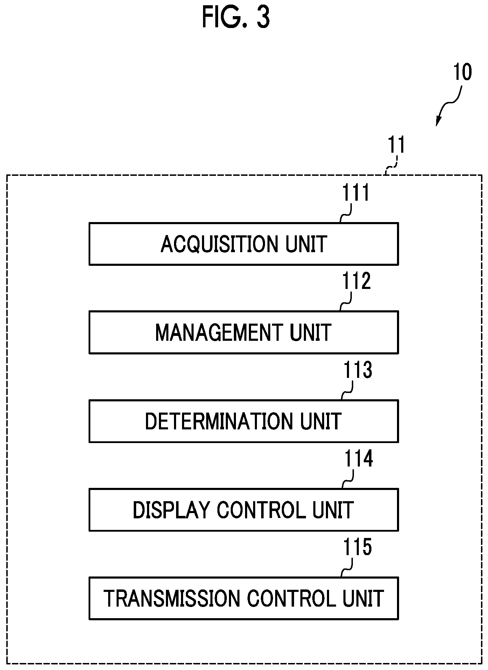

FIG. 3 is a diagram showing an example of a functional configuration of the control unit 11 of the image processing apparatus 10.

In the control unit 11 of the image processing apparatus 10, an acquisition unit 111, a management unit 112, a determination unit 113, a display control unit 114, and a transmission control unit 115 function.

The acquisition unit 111 acquires various types of information. For example, the acquisition unit 111 acquires the input information input to the operation screen displayed on the user terminal 30.

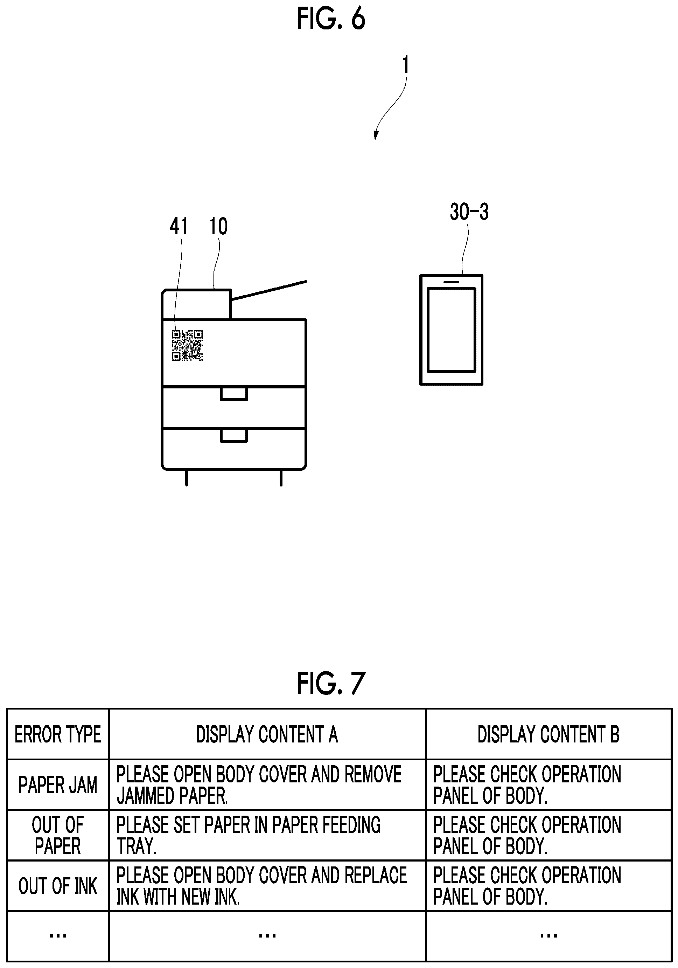

The management unit 112 stores and manages various types of information in the database of the storage unit 13 (see FIG. 2). For example, the management unit 112 stores and manages the display content of the operation screen displayed on each of the display unit 16 (see FIG. 2) of the image processing apparatus 10 and the display unit of the user terminal 30 in the database. The display content includes, for example, a message prompting the physical operation on the image processing apparatus 10 and a message that avoids prompting the physical operation on the image processing apparatus 10. The display content may include not only the message but also an image (still image and moving image) and a hyperlink that guides the user to another file or the like. The management unit 112 manages the message prompting the physical operation on the image processing apparatus 10 and the message that avoids prompting the physical operation on the image processing apparatus 10 in association with each other. A specific example of the display content will be described below with reference to FIG. 7.

The determination unit 113 determines whether or not a distance between the image processing apparatus 10 and the user terminal 30 exceeds a predetermined distance. Here, the "predetermined distance" is not particularly limited and may be, for example, a distance at which the image processing apparatus 10 and the user terminal 30 are connectable to each other by using a predetermined communication method. In this case, the "predetermined communication method" is, for example, short-range wireless communication or wired communication. The "short-range wireless communication" includes, for example, a communication method such as near field communication (NFC) and Bluetooth (registered trademark). In addition, the "wired communication" includes a communication method using a Universal Serial Bus (USB) cable and the like.

In a case where the "predetermined distance" is a distance at which the image processing apparatus 10 and the user terminal 30 are connectable to each other by using the predetermined communication method, the determination unit 113 can perform determination, for example, as follows. That is, in a case where a predetermined identifier attached to the image processing apparatus 10 is read by the user terminal 30, the determination unit 113 determines that the image processing apparatus 10 and the user terminal 30 are at a "connectable distance". Here, the "predetermined identifier" is, for example, a two-dimensional code based on a QR code standard. In addition, the term "attached to the image processing apparatus 10" refers to, for example, a state where the image processing apparatus 10 is displayed on the operation screen or a state where the image processing apparatus 10 is printed on a body of the image processing apparatus 10.

The display control unit 114 performs control of displaying the operation screen for operating the image processing apparatus 10 on the display unit 16 (see FIG. 2) of the image processing apparatus 10. In addition, the display control unit 114 performs control of displaying the display content on the operation screen of the image processing apparatus 10. In addition, the display control unit 114 performs control of displaying the operation screen for operating the image processing apparatus 10 on the display unit of the user terminal 30. In addition, the display control unit 114 performs control of displaying the display content on the operation screen of the user terminal 30.

For example, in a case where the determination unit 113 determines that the distance between the image processing apparatus 10 and the user terminal 30 does not exceed the predetermined distance, the display control unit 114 performs control of displaying the display content of the operation screen of the image processing apparatus 10 on the operation screen of the user terminal 30. In addition, in a case where the determination unit 113 determines that the distance between the image processing apparatus 10 and the user terminal 30 exceeds the predetermined distance, the display control unit 114 performs control of converting the display content of the operation screen of the image processing apparatus 10 into a predetermined form to display the converted display content on the operation screen of the user terminal 30.

The transmission control unit 115 performs control of transmitting various types of information to the user terminal 30 and the outside via the communication unit 14 (see FIG. 2). For example, the transmission control unit 115 performs control of transmitting the display content managed by the management unit 112 to the user terminal 30. The display content transmitted toward the user terminal 30 includes, for example, a combination of the message prompting the physical operation on the image processing apparatus 10 and the message that avoids prompting the physical operation on the image processing apparatus 10.

### <Flow of Processing of Image Processing Apparatus 10>

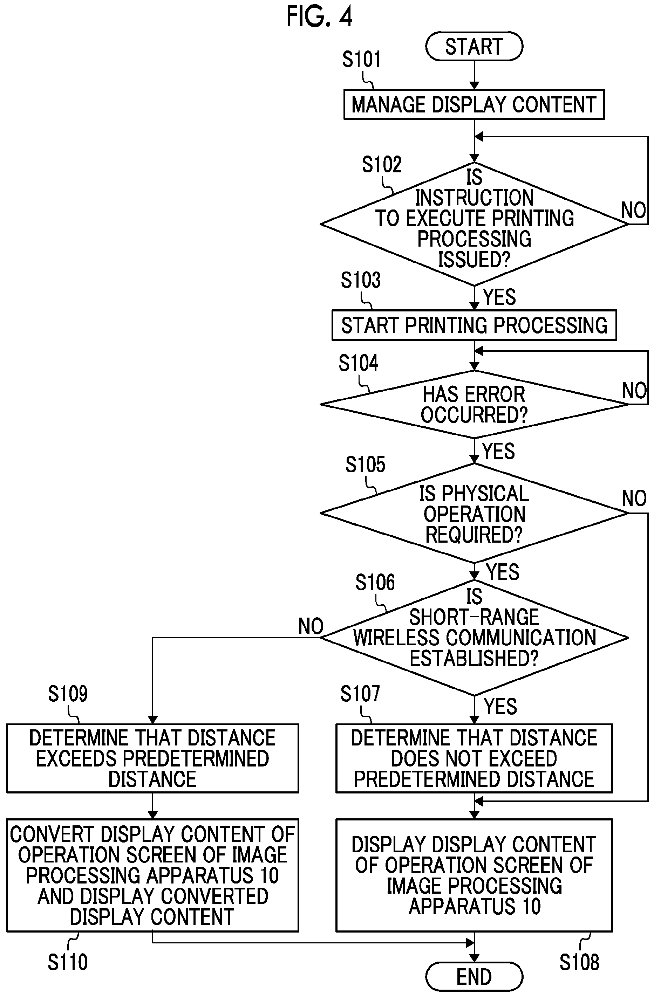

FIG. 4 is a flowchart showing an example of a flow of processing of the image processing apparatus 10. In the example of FIG. 4, it is assumed that the distance at which the image processing apparatus 10 and the user terminal 30 are connectable to each other by using the predetermined communication method is the above-described "predetermined distance".

The image processing apparatus 10 manages the display content displayed on the operation screen of the image processing apparatus 10 and the operation screen of the user terminal 30 (step S101). The image processing apparatus 10 acquires the print data transmitted from the user terminal 30, and, in a case where an instruction to execute the printing processing is issued (YES in step S102), the image processing apparatus 10 starts the printing processing (step S103). On the other hand, in a case where the instruction to execute the printing processing is not issued (NO in step S102), the image processing apparatus 10 repeats the determination processing in step S102.

In a case where the error has occurred during the execution of the printing processing (YES in step S104), the image processing apparatus 10 proceeds to the determination processing in step S105. On the other hand, in a case where an error has not occurred during the execution of the printing processing (NO in step S104), the image processing apparatus 10 repeats the determination processing of step S104.

In a case where the physical operation on the image processing apparatus 10 is required to eliminate the error that has occurred in step S104 (YES in step S105), the image processing apparatus 10 proceeds to the determination processing in step S106. On the other hand, in a case where the physical operation on the image processing apparatus 10 is not required to eliminate the error (NO in step S105), the image processing apparatus 10 displays the display content of the operation screen of the image processing apparatus 10 on the operation screen of the user terminal 30 (step S108). Accordingly, the processing ends (END). Specifically, the image processing apparatus 10 displays the message including the specific operation content for eliminating the error of the image processing apparatus 10 on the operation screen of the user terminal 30, and ends the processing.

In a case where the short-range wireless communication is established between the image processing apparatus 10 and the user terminal 30 (YES in step S106), the image processing apparatus 10 determines that the distance between the image processing apparatus 10 and the user terminal 30 does not exceed the predetermined distance (step S107). In this case, the image processing apparatus 10 displays the display content of the operation screen of the image processing apparatus 10 on the operation screen of the user terminal 30 (step S108), and ends the processing (END).

On the other hand, in a case where the short-range wireless communication is not established between the image processing apparatus 10 and the user terminal 30 (NO in step S106), it is determined that the distance between the image processing apparatus 10 and the user terminal 30 exceeds the predetermined distance (step S109). In this case, the image processing apparatus 10 displays the display content obtained by converting the display content of the operation screen of the image processing apparatus 10 into the predetermined form on the operation screen of the user terminal 30 (step S110), and ends the processing (END). Specifically, the image processing apparatus 10 displays the display content, which is managed in association with the display content displayed on the operation screen of the image processing apparatus 10, on the operation screen of the user terminal 30.

### <Specific Example>

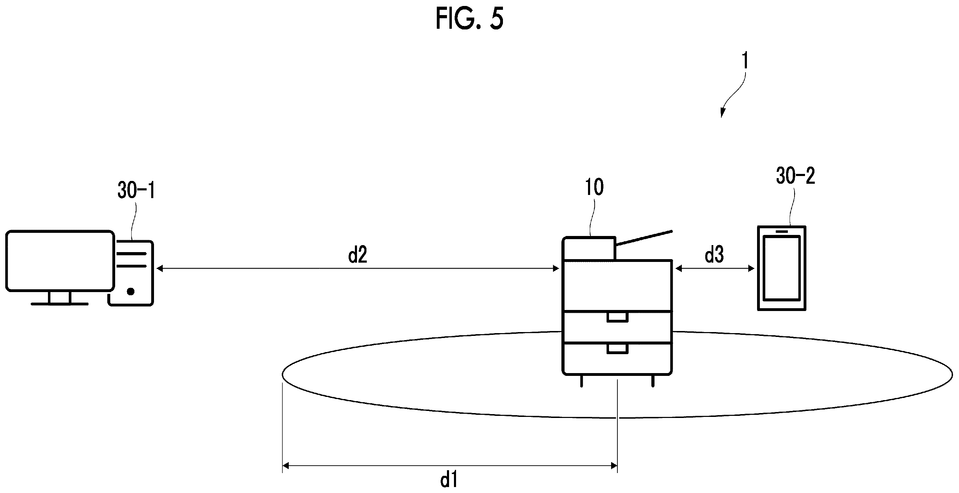

FIGS. 5 and 6 are diagrams showing specific examples of the processing of the image processing apparatus 10 that enables the execution of the printing processing by the remote operation from the user terminal 30. In the example of FIG. 5, it is assumed that the "predetermined distance" is a distance at which the connection can be made by using the short-range wireless communication method. In the example of FIG. 6, it is assumed that the "predetermined distance" is a distance at which the connection can be made by reading the identifier attached to the image processing apparatus 10.

FIG. 5 shows an information processing system 1 including the image processing apparatus 10 and the user terminals 30-1 and 30-2. The image processing apparatus 10 manages the display content displayed on the operation screen of the image processing apparatus 10 and the display content displayed on the operation screen of each of the user terminals 30-1 and 30-2.

In the example of FIG. 5, a distance d1 is a distance at which the image processing apparatus 10 and the user terminals 30-1 and 30-2 are connectable to each other by using the short-range wireless communication method. A distance d2 is an actual distance between the image processing apparatus 10 and the user terminal 30-1. A distance d3 is an actual distance between the image processing apparatus 10 and the user terminal 30-2. As shown in FIG. 5, since the distance d2 is longer than the distance d1, the connection using the short-range wireless communication method between the image processing apparatus 10 and the user terminal 30-1 is not established. On the other hand, since the distance d3 is shorter than the distance d1, the connection using the short-range wireless communication method between the image processing apparatus 10 and the user terminal 30-2 is established.

It is assumed that the connection using the short-range wireless communication method in the present exemplary embodiment is independent of the network 90 (see FIG. 1) that connects the image processing apparatus 10 and each of the user terminals 30-1 and 30-2 to each other. That is, in a state where the image processing apparatus 10 and the user terminal 30-1 are connected to each other via the network 90, there are two cases where the image processing apparatus 10 and the user terminal 30-1 are connected to each other by using the short-range wireless communication method and are not connected to each other. In a state where the image processing apparatus 10 and the user terminal 30-2 are connected to each other via the network 90, there are two cases where the image processing apparatus 10 and the user terminal 30-2 are connected to each other by using the short-range wireless communication method and are not connected to each other.

In the state shown in FIG. 5, in a case where the instruction to execute the printing processing is issued from each of the user terminal 30-1 and the user terminal 30-2, the image processing apparatus 10 starts the printing processing in accordance with the instruction to execute the printing processing. Thereafter, the error occurs during the execution of the printing processing, and the physical operation on the image processing apparatus 10 is required to eliminate the error. In this case, the image processing apparatus 10 performs the following processing.

That is, in a case where the error has occurred in the printing processing based on the instruction issued from the user terminal 30-1, the image processing apparatus 10 is in a positional relationship of the distance d1 < the distance d2 in which the image processing apparatus 10 and the user terminal 30-1 are not connected by using the short-range wireless communication method, and thus the image processing apparatus 10 performs the following processing. That is, the image processing apparatus 10 displays the display content obtained by converting the display content of the operation screen of the image processing apparatus 10 into the predetermined form on the operation screen of the user terminal 30-1. Specifically, the image processing apparatus 10 displays the display content, which is managed in association with the display content displayed on the operation screen of the image processing apparatus 10, on the operation screen of the user terminal 30.

In a case where the error has occurred in the printing processing based on the instruction issued from the user terminal 30-2, the image processing apparatus 10 is in a positional relationship of the distance d1 > the distance d2 in which the image processing apparatus 10 and the user terminal 30-2 are connected by using the short-range wireless communication method, and thus the image processing apparatus 10 performs the following processing. That is, the image processing apparatus 10 displays the display content of the operation screen of the image processing apparatus 10, on the operation screen of the user terminal 30-1. Specifically, the image processing apparatus 10 displays the display content displayed on the operation screen of the image processing apparatus 10, on the operation screen of the user terminal 30 without converting the display content. In this case, the user eliminates the error by performing the physical operation on the image processing apparatus 10 while viewing the display content displayed on the operation screen of the user terminal 30-2 without checking the display content displayed on the operation screen of the image processing apparatus 10.

FIG. 6 shows the information processing system 1 including the image processing apparatus 10 and the user terminal 30-3. The image processing apparatus 10 manages the display content displayed on the operation screen of the image processing apparatus 10 and the display content displayed on the operation screen of the user terminal 30-3. In the example of FIG. 6, a two-dimensional code 41 as the predetermined identifier is attached to the image processing apparatus 10. Specifically, the two-dimensional code 41 is printed on the body of the image processing apparatus 10. Here, in a case where the two-dimensional code 41 printed on the image processing apparatus 10 is read by the user terminal 30-3, the connection is established between the image processing apparatus 10 and the user terminal 30-3.

The connection established by reading the two-dimensional code 41 by the user terminal 30-3 uses, for example, a communication method such as Bluetooth. It is assumed that the connection using such communication is independent of the network 90 (see FIG. 1) that connects the image processing apparatus 10 and the user terminal 30-3. That is, in a state where the image processing apparatus 10 and the user terminal 30-3 are connected to each other via the network 90, there are two cases where the image processing apparatus 10 and the user terminal 30-3 are connected to each other by reading the two-dimensional code 41 and are not connected to each other.

In the state shown in FIG. 6, in a case where the instruction to execute the printing processing is issued from the user terminal 30-3, the image processing apparatus 10 starts the printing processing in accordance with the instruction to execute the printing processing. Thereafter, the error occurs during the execution of the printing processing, and the physical operation on the image processing apparatus 10 is required to eliminate the error. In this case, the image processing apparatus 10 performs the following processing.

That is, in a case where the error has occurred in the printing processing based on the instruction issued from the user terminal 30-3, the image processing apparatus 10 is in a state where the image processing apparatus 10 and the user terminal 30-3 are connected to each other, and thus the image processing apparatus 10 performs the following processing. That is, the image processing apparatus 10 displays the display content of the operation screen of the image processing apparatus 10, on the operation screen of the user terminal 30-3. Specifically, the image processing apparatus 10 displays the display content displayed on the operation screen of the image processing apparatus 10, on the operation screen of the user terminal 30 without converting the display content.

FIG. 7 is a diagram showing a specific example of the display content.

The image processing apparatus 10 (see FIG. 1) classifies the display content into the message prompting the physical operation on the image processing apparatus 10 and the message that avoids prompting the physical operation on the image processing apparatus 10 and manages both messages in association with each other. As shown in FIG. 7, the image processing apparatus 10 manages, for example, the message (display content A) prompting the physical operation on the image processing apparatus 10 and the message (display content B) that avoids prompting the physical operation on the image processing apparatus 10 in association with each other for each error type.

As shown in FIG. 7, for example, in a case where the error type is "paper jam", the display content A is "Please open the body cover and remove the jammed paper", and the display content B is "Please check the operation panel of the body". That is, in a case where the distance between the image processing apparatus 10 and the user terminal 30 exceeds the predetermined distance, the image processing apparatus 10 performs the following processing in a case where the error of "paper jam" has occurred during the execution of the printing processing. That is, the image processing apparatus 10 converts the message "Please open the body cover and remove the jammed paper" displayed on the operation screen of the image processing apparatus 10 into the message "Please check the operation panel of the body", and displays the converted message on the operation screen of the user terminal 30.

In a case where the error type is "out of paper", the display content A is "Please set the paper in the paper feeding tray", and the display content B is "Please check the operation panel of the body". In a case where the error type is "out of ink", the display content A is "Please open the body cover and replace ink with new ink", and the display content B is "Please check the operation panel of the body". Even in a case where these errors have occurred, the image processing apparatus 10 converts the message of the display content A displayed on the operation screen of the image processing apparatus 10 into the message of the display content B, and displays the converted message on the operation screen of the user terminal 30.

### <Other Exemplary Embodiments>

While the present exemplary embodiment has been described above, the present invention is not limited to the exemplary embodiment. In addition, the effects of the present invention are not limited to the effects disclosed in the exemplary embodiment. For example, both the overall configuration of the information processing system 1 shown in FIG. 1 and the hardware configuration of the image processing apparatus 10 shown in FIG. 2 are merely examples for achieving the object of the present invention, and are not particularly limited.

Further, the functional configuration of the image processing apparatus 10 shown in FIG. 3 is merely an example, and is not particularly limited. As long as the information processing system 1 in FIG. 1 has a function with which the above-described processing can be executed as a whole, a functional configuration to be used to implement the function is not limited to the example in FIG. 3. Further, the order of steps of the processing of the image processing apparatus 10 shown in the flowchart of FIG. 4 is merely an example, and is not particularly limited. The processing is not limited to being executed in time series along the shown order of steps, and may instead be carried out in parallel or individually without necessarily following a time-series sequence. In addition, the specific examples shown in FIG. 5 to FIG. 7 are merely examples, and are not particularly limited.

In addition, in the above-described exemplary embodiment, in a case where the distance between the image processing apparatus 10 and the user terminal 30 exceeds the predetermined distance, the display content of the operation screen of the image processing apparatus 10 is automatically converted into the predetermined form and then displayed on the operation screen of the user terminal 30. However, the present invention is not limited to this, and the following configuration may be adopted as a configuration for preventing a situation where the conversion contrary to the intention of the user is performed or the conversion is not performed due to some trouble. That is, the display content of the operation screen of the image processing apparatus 10 may be converted into the predetermined form and then displayed on the operation screen of the user terminal 30 in accordance with the instruction of the user. In this case, a button or the like that enables switching between automatic conversion and manual conversion may be displayed on the user terminal 30.

In a case where the distance between the image processing apparatus 10 and the user terminal 30 exceeds or falls below the predetermined distance due to the movement of the user terminal 30 after the display content of the operation screen of the image processing apparatus 10 is converted into the predetermined form and then displayed on the operation screen of the user terminal 30, the display content of the operation screen of the user terminal 30 may be updated. In this case, the display content of the operation screen of the user terminal 30 may be automatically updated, or may be updated manually (by pressing the button or the like) at a timing desired by the user.

The present invention is also applicable to a program and a program product.

### (Supplementary Note)

(((1))) An information processing system comprising:
   a processor configured to:
   display, in a case where a distance between a first apparatus and a second apparatus does not exceed a predetermined distance, display content of an operation screen of the first apparatus on an operation screen of the second apparatus; and
   convert, in a case where the distance exceeds the predetermined distance, the display content into a predetermined form to display the converted display content on the operation screen of the second apparatus.
(((2))) The information processing system according to (((1))),
   wherein the predetermined distance is a distance at which the first apparatus and the second apparatus are connectable to each other by using a predetermined communication method.
(((3))) The information processing system according to (((2))),
   wherein the predetermined communication method is short-range wireless communication or wired communication.
(((4))) The information processing system according to (((2))), wherein the processor is configured to:
   display, in a case where a predetermined identifier attached to the first apparatus is read by the second apparatus, the display content on the operation screen of the second apparatus on an assumption that the first apparatus and the second apparatus are at the distance at which the first apparatus and the second apparatus are connectable to each other.
(((5))) The information processing system according to any one of (((1))) to (((4))),
   wherein the display content is a message prompting a physical operation on the first apparatus, and the display content converted into the predetermined form is a message that avoids prompting the physical operation on the first apparatus.
(((6))) The information processing system according to (((5))),
   wherein the message prompting the physical operation is a message including specific operation content for eliminating an error of the first apparatus, and the message that avoids prompting the physical operation is a message not including the specific operation content.
(((7))) An information processing apparatus comprising:
   a processor configured to:
   display, in a case where a distance between the information processing apparatus and a terminal that operates the information processing apparatus does not exceed a predetermined distance, display content of an operation screen of the information processing apparatus on an operation screen of the terminal; and
   convert, in a case where the distance exceeds the predetermined distance, the display content into a predetermined form to display the converted display content on the operation screen of the terminal.
(((8))) A program executed by a computer that controls a first apparatus and a second apparatus, the program causing the computer to implement:
   a function of displaying, in a case where a distance between a first apparatus and a second apparatus does not exceed a predetermined distance, display content of an operation screen of the first apparatus on an operation screen of the second apparatus; and
   a function of converting, in a case where the distance exceeds the predetermined distance, the display content into a predetermined form to display the converted display content on the operation screen of the second apparatus.

According to (((1))), the display content of the operation screen of the first apparatus may be displayed on the operation screen of the second apparatus in a form in which the distance between the first apparatus and the second apparatus are taken into consideration, as compared with a case where the display content of the operation screen of the first apparatus is uniformly converted and displayed on the operation screen of the second apparatus regardless of the distance between the first apparatus and the second apparatus.

According to (((2))), whether or not the distance from the second apparatus to the first apparatus is short may be determined depending on whether or not the first apparatus and the second apparatus are connectable to each other by using the predetermined communication method.

According to (((3))), whether or not the distance from the second apparatus to the first apparatus is short may be determined depending on whether or not the first apparatus and the second apparatus are connectable by using the short-range wireless communication or wired communication method.

According to (((4))), whether or not the distance from the second apparatus to the first apparatus is short may be determined depending on whether or not the identifier attached to the first apparatus is read by the second apparatus.

According to (((5))), the message prompting the physical operation, which is displayed on the operation screen of the first apparatus, may be displayed on the operation screen of the second apparatus in a form in which the distance between the first apparatus and the second apparatus are taken into consideration, as compared with a case where the message prompting the physical operation, which is displayed on the operation screen of the first apparatus, is uniformly converted into the message that avoids prompting the physical operation and displayed on the operation screen of the second apparatus regardless of the distance between the first apparatus and the second apparatus. Also, even in a case where it is difficult to perform the physical operation on the first apparatus while viewing the message displayed on the operation screen of the first apparatus, the physical operation on the first apparatus may be performed while viewing the message displayed on the operation screen of the second apparatus.

According to (((6))), the message including the specific operation content for eliminating the error of the first apparatus and displayed on the operation screen of the first apparatus may be displayed on the operation screen of the second apparatus in a form in which the distance between the first apparatus and the second apparatus are taken into consideration, as compared with a case where the message including the specific operation content for eliminating the error of the first apparatus is uniformly converted into the message not including the specific operation content for eliminating the error and displayed on the operation screen of the second apparatus regardless of the distance between the first apparatus and the second apparatus.

According to (((7))), the display content of the operation screen of the first apparatus may be displayed on the operation screen of the second apparatus in a form in which the distance between the first apparatus and the second apparatus are taken into consideration, as compared with a case where the display content of the operation screen of the first apparatus is uniformly converted and displayed on the operation screen of the second apparatus regardless of the distance between the first apparatus and the second apparatus.

According to (((8))), the display content of the operation screen of the first apparatus may be displayed on the operation screen of the second apparatus in a form in which the distance between the first apparatus and the second apparatus are taken into consideration, as compared with a case where the display content of the operation screen of the first apparatus is uniformly converted and displayed on the operation screen of the second apparatus regardless of the distance between the first apparatus and the second apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: image processing apparatus
11: control unit
12: memory
13: storage unit
14: communication unit
15: operation unit
16: display unit
17: reading unit
18: image forming unit
30: user terminal
41: two-dimensional code
90: network
111: acquisition unit
112: management unit
113: determination unit
114: display control unit
115: transmission control unit

## Claims

1. An information processing system comprising:
a processor configured to:
display, in a case where a distance between a first apparatus and a second apparatus does not exceed a predetermined distance, display content of an operation screen of the first apparatus on an operation screen of the second apparatus; and
convert, in a case where the distance exceeds the predetermined distance, the display content into a predetermined form to display the converted display content on the operation screen of the second apparatus.

2. The information processing system according to claim 1,
wherein the predetermined distance is a distance at which the first apparatus and the second apparatus are connectable to each other by using a predetermined communication method.

3. The information processing system according to claim 2,
wherein the predetermined communication method is short-range wireless communication or wired communication.

4. The information processing system according to claim 2, wherein the processor is configured to:
display, in a case where a predetermined identifier attached to the first apparatus is read by the second apparatus, the display content on the operation screen of the second apparatus on an assumption that the first apparatus and the second apparatus are at the distance at which the first apparatus and the second apparatus are connectable to each other.

5. The information processing system according to any one of claims 1 to 4,
wherein the display content is a message prompting a physical operation on the first apparatus, and the display content converted into the predetermined form is a message that avoids prompting the physical operation on the first apparatus.

6. The information processing system according to claim 5,
wherein the message prompting the physical operation is a message including specific operation content for eliminating an error of the first apparatus, and the message that avoids prompting the physical operation is a message not including the specific operation content.

7. An information processing apparatus comprising:
a processor configured to:
display, in a case where a distance between the information processing apparatus and a terminal that operates the information processing apparatus does not exceed a predetermined distance, display content of an operation screen of the information processing apparatus on an operation screen of the terminal; and
convert, in a case where the distance exceeds the predetermined distance, the display content into a predetermined form to display the converted display content on the operation screen of the terminal.

8. A program executed by a computer that controls a first apparatus and a second apparatus, the program causing the computer to implement:
a function of displaying, in a case where a distance between a first apparatus and a second apparatus does not exceed a predetermined distance, display content of an operation screen of the first apparatus on an operation screen of the second apparatus; and
a function of converting, in a case where the distance exceeds the predetermined distance, the display content into a predetermined form to display the converted display content on the operation screen of the second apparatus.

## Amended claims

### Amended claims in accordance with Rule 137(2) EPC.

1. An information processing system (1) comprising:
a first apparatus (10) comprising a processor (11), wherein the processor (11) configured to:
control an operation screen of a second apparatus (30) to display, in a case where a distance between the first apparatus (10) and the second apparatus (30) does not exceed a predetermined distance, display content of an operation screen of the first apparatus (10); and
convert, in a case where the distance exceeds the predetermined distance, the display content into a predetermined form, and control the operation screen of the second apparatus (30) to display the converted display content.

2. The information processing system (1) according to claim 1,
wherein the predetermined distance is a distance at which the first apparatus (10) and the second apparatus (30) are connectable to each other by using a predetermined communication method.

3. The information processing system (1) according to claim 2,
wherein the predetermined communication method is short-range wireless communication or wired communication.

4. The information processing system (1) according to claim 2, wherein the processor (11) is configured to:
display, in a case where a predetermined identifier attached to the first apparatus (10) is read by the second apparatus (30), the display content on the operation screen of the second apparatus (30) on an assumption that the first apparatus (10) and the second apparatus (30) are at the distance at which the first apparatus (10) and the second apparatus (30) are connectable to each other.

5. The information processing system (1) according to any one of claims 1 to 4,
wherein the display content is a message prompting a physical operation on the first apparatus (10), and the display content converted into the predetermined form is a message that avoids prompting the physical operation on the first apparatus (10).

6. The information processing system (1) according to claim 5,
wherein the message prompting the physical operation is a message including specific operation content for eliminating an error of the first apparatus (10), and the message that avoids prompting the physical operation is a message not including the specific operation content.

7. An information processing apparatus comprising:
a processor (11) configured to:
control an operation screen of a terminal that operates the information processing apparatus to display, in a case where a distance between the information processing apparatus and the terminal does not exceed a predetermined distance, display content of an operation screen of the information processing apparatus; and
convert, in a case where the distance exceeds the predetermined distance, the display content into a predetermined form, and control the operation screen of the terminal to display the converted display content.

8. A program executed by a computer that controls a first apparatus (10) and a second apparatus (30), the program causing the computer to implement:
a function of controlling an operation screen of the second apparatus (30) to display, in a case where a distance between the first apparatus (10) and the second apparatus (30) does not exceed a predetermined distance, display content of an operation screen of the first apparatus (10); and
a function of converting, in a case where the distance exceeds the predetermined distance, the display content into a predetermined form, and controlling the operation screen of the second apparatus (30) to display the converted display content.
